(19) Europäisches Patentamt
European Patent Office
Office européen des brevets

(11) EP 3 689 937 A1

(12) EUROPEAN PATENT APPLICATION
published in accordance with Art. 153(4) EPC

(43) Date of publication:
**05.08.2020 Bulletin 2020/32**

(21) Application number: **18860340.1**

(22) Date of filing: **12.09.2018**

(51) Int Cl.:
***C08G 59/50*** *(2006.01)* ***C08F 20/20*** *(2006.01)*
***C08J 5/04*** *(2006.01)*

(86) International application number:
**PCT/JP2018/033838**

(87) International publication number:
**WO 2019/065248 (04.04.2019 Gazette 2019/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **29.09.2017 JP 2017190444**

(71) Applicant: **NIPPON STEEL Chemical & Material Co., Ltd.**
**Tokyo 103-0027 (JP)**

(72) Inventors:
- **KANO Kyohei**
  **Tokyo 1030027 (JP)**
- **TANIGUCHI Yuichi**
  **Tokyo 101-0021 (JP)**

(74) Representative: **Beckmann, Claus**
**Kraus & Weisert**
**Patentanwälte PartGmbB**
**Thomas-Wimmer-Ring 15**
**80539 München (DE)**

# (54) RESIN COMPOSITION FOR FIBER-REINFORCED COMPOSITE MATERIAL AND FIBER-REINFORCED COMPOSITE MATERIAL OBTAINED USING SAME

(57) Provided is a resin composition suitable as a matrix resin for a fiber-reinforced composite material, the resin composition having the following features: the resin composition shows satisfactory impregnability into reinforcing fibers and has rapid curability; and a molded product obtained at the time of the curing of the resin composition has high heat resistance and is excellent in short-time productivity. The resin composition is a resin composition for a fiber-reinforced composite material including: a main agent containing an epoxy resin (A) and an acrylate compound (B) having 4 or more acryloyl groups in a molecule thereof; and a curing agent containing an amine compound (C) represented by the following general formula (1), the resin composition being a two-component curable resin composition including the main agent and the curing agent at a mass ratio in the range of from 90:10 to 65:35, wherein the main agent has a viscosity at 25°C measured with an E-type viscometer of 20, 000 mPa·s or less, and wherein the curing agent has a viscosity at 25°C measured with the E-type viscometer of 800 mPa·s or less:

$$X\text{-}(CH_2NH_2)_n \qquad (1)$$

where X represents an n-valent organic group having 1 to 16 carbon atoms, and "n" represents 2 or 3.

EP 3 689 937 A1

## Description

### Technical Field

The present invention relates to a resin composition that has a low viscosity and is excellent in short-time curability, the resin composition serving as a matrix resin material for a fiber-reinforced composite material that provides, at the time of its curing, a molded product that has high heat resistance and is excellent in releasability from a mold, and a method of molding the resin composition.

### Background Art

In general, a fiber-reinforced composite material has been widely applied as a structural material for an aircraft, an automobile, civil engineering and construction, sporting goods, and the like because the material includes reinforcing fibers, such as glass fibers, aramid fibers, or carbon fibers, and a thermosetting matrix resin, such as an unsaturated polyester resin, a vinyl ester resin, an epoxy resin, a phenol resin, a benzoxazine resin, a cyanate resin, or a bismaleimide resin, has a light weight, and is excellent in mechanical properties, such as a strength, corrosion resistance, and fatigue resistance.

The production of the fiber-reinforced composite material is performed by an approach such as: an autoclave molding method or a press molding method including using a prepreg obtained by impregnating the reinforcing fibers with the thermosetting matrix resin in advance; or a resin transfer molding method, a liquid compression molding method, a wet lay-up molding method, apultrusion molding method, or a filament winding molding method including a step of impregnating the reinforcing fibers with a liquid matrix resin and a molding step based on heat curing. In a molding method in which the impregnation and the molding are performed without the use of any prepreg, such as the resin transfer molding method, out of those methods, a low-viscosity matrix resin is used in order that the reinforcing fibers may be immediately impregnated with the resin.

In addition, in each of the resin transfer molding method and the liquid compression molding method out of those methods, to secure high productivity, a matrix resin having the following feature has been required. After the reinforcing fibers have been impregnated with the resin, the resin cures at a fast rate.

Further, the resin transfer moldingmethodand the liquid compression molding method each include a step of releasing a molded product from a mold after the curing, and hence a matrix resin composition that has not only a fast curing rate but also excellent mold releasability has been required to secure high productivity.

In each of the resin transfer molding method and the liquid compression molding method, a thermosetting resin, such as an unsaturated polyester resin, a vinyl ester resin, a urethane resin, or an epoxy resin, has heretofore been used. Although each of the unsaturated polyester resin and the vinyl ester resin each having radical polymerizability has a low viscosity and is excellent in rapid curability, the resins each involve a problem in that the curing shrinkage of the resin at the time of its molding is large, and hence the mechanical properties of a molded product, such as heat resistance, a strength, and toughness, are relatively low. Although the urethane resin is excellent in rapid curability, and hence provides a molded product having a high strength and high toughness, the resin involves a problem in that the molded product has low heat resistance and a high water absorption ratio. Although the epoxy resin provides a molded product having high heat resistance, a high strength, and high toughness, the resin involves a problem in that the viscosity of the resin is relatively high.

When the epoxy resin is used as a matrix resin for a fiber-reinforced composite material, a bisphenol A-type epoxy resin is generally used because the resin is excellent in economical efficiency and physical properties. However, a bisphenol F-type epoxy resin having a low viscosity is also used for improving impregnability into the fibers.

In Patent Literature 1, there is a proposal of a low-viscosity resin composition for a fiber-reinforced composite material using a bisphenol F-type epoxy resin. However, the bisphenol F-type epoxy resin is not desired in an application where heat resistance is requiredbecause the resin provides a curedproduct having a glass transition temperature lower than that of a cured product provided by the bisphenol A-type epoxy resin.

To achieve a reduction in viscosity and curability at low temperature, in each of Patent Literatures 2, 3, and 4, there is a proposal of a resin composition formed of an epoxy resin, a polyfunctional acrylate compound, and a curing agent. However, the invention proposed in each of the patent literatures is an invention to be used in a concrete repair material or adhesive application. Moreover, the resin composition has a low glass transition temperature and insufficient heat resistance.

In Patent Literature 5, there is an attempt to impart rapid curability to a resin composition through the combination of an epoxy resin and a specific phenol compound. However, the resin composition still requires a long time to gel, and hence has insufficient rapid curability.

In each of Patent Literatures 6 and 7, there is an attempt to add a specific catalyst to a resin composition formed of an epoxy resin and a polyethylene polyamine to impart rapid curability thereto . However, a bisphenol A-type epoxy

resin is used as a main agent, and hence there is a problem in that the viscosity of the main agent is high.

In Patent Literature 8, there is a proposal of an improvement in mold releasability through an improvement in initial hardness of an epoxy resin at the time of its curing by the addition of a curing accelerator containing a quaternary phosphonium and a phenol resin to the resin. However, the invention proposed in the patent literature is an invention to be used in the application of a sealing material for an electronic part, such as a semiconductor, and involves a problem in that the use of the curing accelerator reduces the glass transition temperature of a cured product.

In Patent Literature 9, there is a proposal of a resin composition that contains a polyfunctional biphenyl novolac-type epoxy resin, a (meth)acrylate, and the like, and is excellent in releasability from a mold in transfer molding. However, the invention proposed in the patent literature is an invention to be used in an optical semiconductor sealing application, and no investigation has been made on its application to a resin composition for a fiber-reinforced composite material.

With regard to a matrix resin for a fiber-reinforced composite material, an investigation has been made on an attempt to reduce the viscosity of a resin composition serving as the resin to improve its impregnability and to impart rapid curability to a molded product thereof. In addition to the foregoing, however, an improvement in heat resistance of the molded product has been desired.

Citation List

Patent Literature

[PTL 1] JP 2006-265434 A
[PTL 2] JP 2002-256139 A
[PTL 3] JP 2002-275242 A
[PTL 4] JP 2012-211244 A
[PTL 5] JP 2016-098322 A
[PTL 6] JP 2015-535022 A
[PTL 7] JP 2015-536373 A
[PTL 8] JP 2013-216871 A
[PTL 9] WO 2011/052161 A1

Summary of Invention

An object of the present invention is to provide a resin composition having the following features through a reduction in viscosity of the resin composition by a reduction in viscosity of a main agent: the resin composition shows satisfactory impregnability into reinforcing fibers, has rapid curability, and is excellent in releasability from a mold; and a molded product obtained by curing the resin composition has high heat resistance. Another object of the present invention is to provide a resin composition that can provide a fiber-reinforced composite material with satisfactory productivity.

The inventors of the present invention have made an investigation to solve the problems, and as a result, have found that the use of a specific epoxy resin, a specific acrylate compound, and a specific amine compound provides a molded product having high heat resistance, and hence solves the problems. Thus, the inventors have completed the present invention.

That is, according to one embodiment of the present invention, there is provided a resin composition for a fiber-reinforced composite material, including: a main agent containing an epoxy resin (A) and an acrylate compound (B) having 4 or more acryloyl groups in a molecule thereof; and a curing agent containing an amine compound (C) represented by the following general formula (1), the resin composition being a two-component curable resin composition including the main agent and the curing agent at a mass ratio in a range of from 90 : 10 to 65:35, wherein the epoxy resin (A) contains 50 mass% to 100 mass% of a bisphenol A-type epoxy resin, wherein a mass ratio between the epoxy resin (A) and the acrylate compound (B) in the main agent falls within a range of from 96:4 to 80:20, wherein the main agent has a viscosity at 25°C measured with an E-type viscometer of 20,000 mPa·s or less, and wherein the curing agent has a viscosity at 25°C measured with the E-type viscometer of 800 mPa·s or less:

$$X\text{-}(CH_2NH_2)n \qquad (1)$$

where X represents an n-valent organic group having 1 to 16 carbon atoms, and "n" represents 2 or 3.

The X suitably represents an n-valent hydrocarbon group having an alicyclic structure having 6 or more carbon atoms, and the alicyclic structure may have a secondary amine structure therein.

The amine compound (C) is preferably a diamine represented by the following formula (2) or (3).

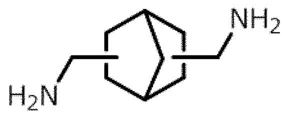

(2)

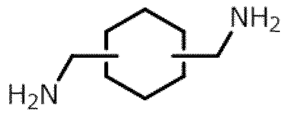

(3)

In the present invention, the acrylate compound (B) is preferably at least one kind selected from ditrimethylolpropane tetraacrylate, pentaerythritol tetraacrylate, dipentaerythritol pentaacrylate, and dipentaerythritol hexaacrylate.

In the present invention, the mass ratio between the epoxy resin (A) and the acrylate compound (B) in the main agent preferably falls within the range of from 96:4 to 70:30.

In the present invention, the main agent containing the epoxy resin (A) and the acrylate compound (B) preferably shows a viscosity increase ratio of 16% or less after the lapse of 24 hr at a degree of vacuum of 1.0 kPa and 80°C.

In the present invention, a cured product obtained by thermally treating the resin composition for a fiber-reinforced composite material at 130°C for 5 min to cure the resin composition preferably shows a glass transition temperature of 110°C or more.

According to another embodiment of the present invention, there is provided a fiber-reinforced composite material, which is obtained by blending the resin composition for a fiber-reinforced composite material with reinforcing fibers. In this case, a volume content of the reinforcing fibers is preferably from 45% to 70%.

According to another embodiment of the present invention, there is provided a cured product, which is obtained by curing the fiber-reinforced composite material. According to another embodiment of the present invention, there is provided a method of producing a molded body, including molding the fiber-reinforced composite material by a resin transfer molding method or a liquid compression molding method.

According to another embodiment of the present invention, there is provided a method of producing a molded body, including: preparing a main agent that contains an epoxy resin (A) containing 50 mass% to 100 mass% of a bisphenol A-type epoxy resin and an acrylate compound (B) having 4 or more acryloyl groups in a molecule thereof, in which a mass ratio between the epoxy resin (A) and the acrylate compound (B) falls within a range of from 96:4 to 80:20, and that has a viscosity at 25°C measured with an E-type viscometer of 20, 000 mPa·s or less, and a curing agent containing an amine compound (C) represented by the following general formula (1):

$$X\text{-}(CH_2NH_2)n \qquad (1)$$

where X represents an n-valent organic group having 1 to 16 carbon atoms, and "n" represents 2 or 3; warming the main agent to from 50°C to 90°C, and warming the curing agent to from 20°C to 60°C to provide a two-component curable resin composition for a fiber-reinforced composite material so that a mass ratio between the main agent and the curing agent falls within a range of from 90:10 to 65:35; blending the resultant with reinforcing fibers to provide a fiber-reinforced composite material; and then curing and molding the fiber-reinforced composite material in a mold under heat.

Description of Embodiments

An embodiment of the present invention is described in detail below.

A resin composition for a fiber-reinforced composite material of the present invention is a two-component curable resin composition including: a main agent formed of an epoxy resin (A) and an acrylate compound (B) having 4 or more acryloyl groups in a molecule thereof; and a curing agent formed of an amine compound (C) represented by the general formula (1). Herein, the epoxy resin (A), the acrylate compound (B) having 4 or more acryloyl groups in a molecule thereof, and the amine compound (C) are sometimes referred to as "component (A)", "component (B)", and "component (C)", respectively.

A bisphenol A-type epoxy resin needs to account for 50 mass% to 100 mass% of the epoxy resin (A) to be used as the component (A). When the bisphenol A-type epoxy resin is used, the heat stability of the main agent can be improved, and hence the viscosity thereof can be reduced by heating. In addition, the heat resistance of a molded body obtained by the heat curing of the resin composition is excellent. Meanwhile, when a bisphenol F-type epoxy resin is used as a main component, the viscosity can be reduced, but the heat resistance of the molded body to be obtained reduces. When a phenol novolac-type epoxy resin is used, the heat resistance of the molded body can be improved,

but the viscosity increases, and hence the impregnability of the resin composition into reinforcing fibers is impaired.

The bisphenol A-type epoxy resin is preferably a low-viscosity liquid resin. Its epoxy equivalent is preferably from 150 g/eq to 250 g/eq, more preferably from 180 g/eq to 230 g/eq.

The epoxy resin (A) to be used in the present invention may contain any other epoxy resin to the extent that the viscosity of the main agent does not increase, and as long as its content is less than 50 mass%. The epoxy resin (A) is preferably a compound having 2 or more epoxy groups in a molecule thereof, and for example, the following compounds may each be used: a bisphenol-type epoxy resin, such as a bisphenol F-type epoxy resin, a bisphenol E-type epoxy resin, a bisphenol S-type epoxy resin, a bisphenol Z-type epoxy resin, or an isophorone bisphenol-type epoxy resin; a halogen or alkyl substituted product, a hydrogenated product, or a monomer of the bisphenol-type epoxy resin, or as well, a polymer of the bisphenol-type epoxy resin having a plurality of repeating units, or a glycidyl ether of an alkylene oxide adduct of the bisphenol-type epoxy resin; a novolac-type epoxy resin, such as a phenol novolac-type epoxy resin, a cresol novolac-type epoxy resin, or a bisphenol A novolac-type epoxy resin; an alicyclic epoxy resin, such as 3,4-epoxy-6-methylcyclohexylmethyl-3,4-epoxy-6-methylcyclohexa necarboxylate, 3,4-epoxycyclohexylmethyl-3,4-epoxycyclohexanecarboxylate, or 1-epoxyethyl-3,4-epoxycyclohexane; an aliphatic epoxy resin, such as trimethylolpropane polyglycidyl ether, pentaerythritol polyglycidyl ether, or a polyoxyalkylene diglycidyl ether; a glycidyl ester, such as phthalic acid diglycidyl ester, tetrahydrophthalic acid diglycidyl ester, or dimer acid glycidyl ester; or a glycidyl amine, such as tetraglycidyl diaminodiphenylmethane, tetraglycidyl diaminodiphenylsulfone, triglycidylaminophenol, triglycidylaminocresol, or tetraglycidyl xylylenediamine. Those compounds maybe used alone or in combination thereof.

Of those epoxy resins, an epoxy resin having 2 or more epoxy groups in a molecule thereof and having a viscosity at 25°C measured with an E-type viscometer of 30, 000 mPa·s or less is preferred from the viewpoint of the viscosity.

The acrylate compound (B) to be used in the present invention has 4 or more acryloyl groups as functional groups in a molecule thereof. When the number of the functional groups in a molecule thereof is less than 4, along with a reduction in crosslink density of a molded product obtained at the time of the heat curing of the resin composition, the heat resistance thereof reduces.

The viscosity of the acrylate compound (B) at 25°C measured with an E-type viscometer is preferably 1,000 mPa·s or less because the viscosity of the main agent can be reduced.

The acrylate compound (B) refers to a compound having 4 or more acryloyl groups ($CH_2$=CHCO-), provided that the resin composition may include 20 mass% or less of a compound having 3 or less acryloyl groups in a molecule thereof in addition to the acrylate compound (B).

The acrylate compound (B) is substantially free of an acid group, such as a carboxyl group, a phosphate group, or a sulfonate group. Any such acid group has reactivity with an epoxy group even at room temperature, and hence increases a viscosity increase ratio when mixed with the epoxy resin to impair stable impregnability into the fibers. The compound is desirably free of a group (e.g., a OH group or an $NH_2$ group) reactive with an epoxy group because of a similar reason. For example, it is desired that the hydroxyl group value of the compound do not exceed 10 mgKOH/g.

Specific examples of the acrylate compound (B) include acrylate compounds of polyols, such as glycerin, ditrimethylolpropane, pentaerythritol, and dipentaerythritol. The examples also include acrylate compounds of polyols, such as glycerin, ditrimethylolpropane, pentaerythritol, and dipentaerythritol, each increased in molecular weight by adding 2 mol or more of ethylene oxide or propylene oxide to 1 mol of the polyol. Those compounds may be used in combination thereof as required.

More specifically, for example, ditrimethylolpropane tetraacrylate, pentaerythritol tetraacrylate, dipentaerythritol pentaacrylate, and dipentaerythritol hexaacrylate are preferably used.

Ablendingratio (A:Bmass ratio) between the epoxy resin (A) and the acrylate compound (B) needs to fall within the range of from 96:4 to 80:20. When the blending ratio of the epoxy resin is more than 96, the viscosity becomes so high that sufficient impregnation of the resin composition into the reinforcing fibers is not performed. In addition, the rapid curability of the resin composition reduces. Meanwhile, when the blending ratio is less than 80, the heat resistance of the molded body reduces and the mold releasability thereof deteriorates.

The viscosity of the main agent at 25°C measured with an E-type viscometer is preferably 20,000 mPa·s or less, more preferably 10, 000 mPa·s or less. In addition, the viscosity increase ratio thereof after the lapse of 24 hr at 80°C is preferably 16% or less, more preferably 8% or less. When the viscosity is more than 20,000 mPa·s, sufficient impregnation of the resin composition into the reinforcing fibers becomes difficult. In addition, a difference in viscosity between the main agent and the curing agent increases, and hence it becomes difficult to uniformly mix the agents . A viscosity increase ratio of more than 16% is not preferred because of the following reason: in, for example, the case where a tank configured to store the main agent is warmed for performing injection and impregnation at a lower viscosity, the viscosity largely increases to cause a problem such as defective molding, the deterioration of continuous production stability, or the solidification of the main agent in the tank. There is no particular lower limit of the viscosity, and the viscosity is preferably as low as possible because the injection and impregnation of the composition at the time of its molding become easier.

The main agent may contain a polymerization inhibitor for improving its thermal stability. Hydroquinone, methylhydroquinone, p-t-butylcatechol, 2-t-butylhydroquinone, 2,5-di-t-butylhydroquinone, trimethylhydroquinone, methoxyhydroquinone, p-benzoquinone, 2,5-di-t-butylbenzoquinone, naphthoquinone, 4-methoxy-1-naphthol, phenothiazine, an N-oxyl compound, or the like may be used as the polymerization inhibitor. The content of the polymerization inhibitor is set to preferably from 0.0005 part by mass to 0.5 part by mass, particularly preferably from 0.001 part by mass to 0.1 part by mass with respect to 100 parts by mass of the acrylate compound (B).

The amine compound (C) in the curing agent is a compound represented by the following general formula (1):

$$X\text{-}(CH_2NH_2)n \qquad (1)$$

where X represents an n-valent organic group having 1 to 16 carbon atoms, and "n" represents 2 or 3.

The amine compound (C) has 2 or 3 aminomethyl groups in a molecule thereof. An aminomethyl group has high reactivity with an epoxy group or an acryloyl group, and hence the compound is excellent in rapid curability. In addition, when the compound has 2 or more aminomethyl groups in a molecule thereof, a molded product that has a high crosslink density and is excellent in heat resistance is obtained at the time of the heat curing of the resin composition.

Specific examples of the amine compound (C) include: acyclic aliphatic polyamines, such as iminobispropylamine, triethylenetetramine, and bis(hexamethylene)triamine; cyclic aliphatic polyamines, such as bis(aminomethyl)cyclohexane, 1,3,6-trisaminomethylcyclohexane, 3,9-bis(3-aminopropyl)-2,4,8,10-tetraoxaspiro(5.5)undecane, and bis (aminomethyl) norbornane; polyamines each having an aromatic ring, such as meta-xylylenediamine (MXDA); and derivatives in each of which an aliphatic ring or an aromatic ring of any such compound is substituted with an alkyl group.

Of those, bis(aminomethyl)norbornane represented by the following formula (2) or bis(aminomethyl)cyclohexane represented by the following formula (3) is particularly preferred in terms of fluidity, rapid curability, and heat resistance.

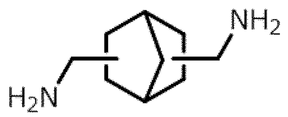

(2)

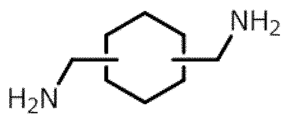

(3)

The curing agent preferably contains 70 mass% or more of the amine compound (C), and is preferably free of any other curing agent for an epoxy resin except the compound, but may be blended with the other curing agent as long as its content is less than 30 mass%. Examples of the other curing agent for an epoxy resin include curing agents for epoxy resins, such as phenol-based and thiol-based curing agents. In addition to the foregoing, the curing agent may contain a curing accelerator, a viscosity modifier, an internal release agent, or the like.

The phenol-based curing agent to be used as the other curing agent for an epoxy resin is not particularly limited, but examples thereof include bisphenol A, bisphenol F, a substituted or unsubstituted biphenol, a phenol novolac resin, a triazine skeleton-containing phenol novolac resin, a naphthol novolac resin, a naphthol aralkyl-type resin, a triazine skeleton-containing naphthol resin, and a biphenyl aralkyl-type phenol resin. Those phenol-based curing agents may be used alone or in combination thereof.

In the curing agent, the amine compound (C) is used as an essential component, and the other curing agent for an epoxy resin may be used as required. In the present invention, the curing agent alone is sufficiently effective.

However, a curing catalyst or a curing accelerator may be used as required for accelerating the curing reaction of the resin composition. For example, the following curing accelerators may each be used: a tertiary amine; a carboxylic acid; a sulfonic acid; a complex of a Lewis acid; an onium salt; imidazole; an alcohol; and a phenol compound, such as phenol, cresol, allylphenol, nitrophenol, para-aminophenol, meta-aminophenol, mono-t-butylphenol, di-t-butylphenol, hydroquinone, methylhydroquinone, dimethylhydroquinone, trimethylhydroquinone, tetramethylhydroquinone, isopropylhydroquinone, methyl-isopropylhydroquinone, mono-t-butylhydroquinone, di-t-butylhydroquinone, mono-t-amylhydroquinone, di-t-amylhydroquinone, nitrohydroquinone, phenylhydroquinone, diphenylhydroquinone, chlorohydroquinone, dichlorohydroquinone, trichlorohydroquinone, tetrachlorohydroquinone, bromohydroquinone, dibromohydroquinone, tribromohydroquinone, tetrabromohydroquinone, catechol, t-butylcatechol, resorcinol, pyrogallol, dinitropyrogallol, or 1,2,4-benzenetriol. Those curing accelerators may be used alone or in combination thereof.

The viscosity of the curing agent containing the amine compound (C) at 25°C measured with an E-type viscometer is 800 mPa·s or less, preferably 400 mPa·s or less, more preferably 100 mPa·s orless, particularlypreferably

50 mPa·s or less. When the viscosity is more than 800 mPa·s, sufficient impregnation of the resin composition into the reinforcing fibers becomes difficult. There is no particular lower limit of the viscosity, and the viscosity is preferably as low as possible because the injection and impregnation of the composition at the time of its molding become easier.

The resin composition of the present invention is a two-component curable resin composition including the main agent and the curing agent, and the mixing of the following agents at a suitable predetermined ratio enables the resin composition to be cured by heating: the main agent containing the epoxy resin (A) and the acrylate compound (B) ; and the curing agent containing the amine compound (C) represented by the general formula (1). The mixing ratio between the main agent and the curing agent is determined by the kinds of the epoxy resin (A) and the curing agent for an epoxy resin to be used. Specifically, the ratio is adjusted by calculating a ratio between the number of epoxy groups in all epoxy resins in the component (A) and the number of active hydrogens in the curing agent for an epoxy resin, and falls within the range of from 90:10 to 65:35, preferably the range of from 88:12 to 73:27 in terms of mass ratio. When the mass ratio deviates from the range, the heat resistance or elastic modulus of the resultant resin cured product may reduce.

In addition, the curing agent is preferably blended with a radical-polymerizable initiator (D) for accelerating the polymerization of the component (B). An azo compound or organic peroxide that generates a radical through heating may be used as the radical-polymerizable initiator (D). Examples thereof include 2,2'-azobisisobutyronitrile, 1,1'-azobis(cyclohexane-1-carbonitrile), methyl ethyl ketone peroxide, methyl cyclohexanone peroxide, methyl acetoacetate peroxide, acetyl acetone peroxide, 1,1-bis(t-butylperoxy)-3,3,5-trimethylcyclohexane, 1,1-bis(t-hexylperoxy)cyclohexane, 1,1-bis(t-hexylperoxy)-3,3,5-trimethylcyclohexane, 1,1-bis(t-butylperoxy)cyclohexane, 2,2-bis(4,4-di-t-butylperoxycyclohexyl)propane, 1,1-bis(t-butylperoxy)cyclododecane, n-butyl 4,4-bis(t-butylperoxy)valerate, 2,2-bis(t-butylperoxy)butane, 1,1-bis(t-butylperoxy)-2-methylcyclohexane, t-butyl hydroperoxide, P-menthane hydroperoxide, 1,1,3,3-tetramethylbutyl hydroperoxide, t-hexyl hydroperoxide, dicumyl peroxide, 2,5-dimethyl-2,5-bis(t-butylperoxy)hexane, $\alpha,\alpha'$-bis(t-butylperoxy)diisopropylbenzene, t-butyl cumyl peroxide, di-t-butyl peroxide, 2,5-dimethyl-2,5-bis(t-butylperoxy)hexyne-3, isobutyryl peroxide, 3,5,5-trimethylhexanoyl peroxide, octanoyl peroxide, lauroyl peroxide, cinnamic acid peroxide, m-toluoyl peroxide, benzoyl peroxide, diisopropyl peroxydicarbonate, bis(4-t-butylcyclohexyl) peroxydicarbonate, di-3-methoxybutyl peroxydicarbonate, di-2-ethylhexyl peroxydicarbonate, di-sec-butyl peroxydicarbonate, di(3-methyl-3-methoxybutyl) peroxydicarbonate, di(4-t-butylcyclohexyl) peroxydicarbonate, $\alpha,\alpha'$-bis(neodecanoylperoxy)diisopropylbenzene, cumyl peroxyneodecanoate, 1,1,3,3-tetramethylbutyl peroxyneodecanoate, 1-cyclohexyl-1-methylethyl peroxyneodecanoate, t-hexyl peroxyneodecanoate, t-butyl peroxyneodecanoate, t-hexyl peroxypivalate, t-butyl peroxypivalate, 2,5-dimethyl-2,5-bis(2-ethylhexanoylperoxy)hexane, 1,1,3,3-tetramethylbutyl peroxy-2-ethylhexanoate, 1-cyclohexyl-1-methylethyl peroxy-2-ethylhexanoate, t-hexyl peroxy-2-ethylhexanoate, t-butylperoxy-2-ethylhexanoate, t-butyl peroxyisobutyrate, t-butyl peroxymaleic acid, t-butyl peroxylaurate, t-butyl peroxy-3,5,5-trimethylhexanoate, t-butyl peroxy isopropyl monocarbonate, t-butyl peroxy-2-ethylhexyl monocarbonate, 2,5-dimethyl-2,5-bis(benzoylperoxy)hexane, t-butyl peroxyacetate, t-hexyl peroxybenzoate, t-butyl peroxy-m-toluoyl benzoate, t-butyl peroxybenzoate, bis(t-butylperoxy)isophthalate, t-butyl peroxy allyl monocarbonate, and 3,3',4,4'-tetra(t-butylperoxycarbonyl)benzophenone. In particular, the radical-polymerizable initiator (D) for obtaining the effects of the present invention is preferably a compound having a 10-hr half-life temperature of from 120°C to 160°C, more preferably a compound having a 10-hr half-life temperature of from 120°C to 140°C. When any such compound is used, the rapid curability of the resin composition at the time of the mixing of the curing agent and the curing accelerator is improved, and hence a molded product excellent in heat resistance and toughness is obtained at the time of the heat curing of the resin composition.

The usage amount of the radical-polymerizable initiator (D) is set to preferably from 0.005 part by mass to 5.0 parts by mass, particularly preferably from 0.1 part by mass to 2.0 parts by mass with respect to 100 parts by mass of the acrylate compound (B). When the amount is less than 0.005 part by mass, the curing rate of the radical-polymerizable monomer reduces to reduce productivity, and in some cases, the curing becomes insufficient to impair the heat resistance and toughness of the molded product. When the amount is more than 5.0 parts by mass, the curing rate of the radical-polymerizable monomer becomes so fast that the resin composition shows a high viscosity increase ratio, and hence its stable impregnability into fibers is impaired. In addition, the initiator is added to the curing agent.

The main agent and the curing agent may be appropriately blended with any other component, such as a plasticizer, a dye, an organic pigment, an inorganic filler, a polymer compound, a coupling agent, a surfactant, or a solvent. In addition, the main agent and the curing agent may be blended with any other curable resin. Examples of such curable resin include, but are not limited to, anunsaturatedpolyester resin, a curable acrylic resin, a curable amino resin, a curable melamine resin, a curable urea resin, a curable cyanate ester resin, a curable urethane resin, a curable oxetane resin, and a curable epoxy/oxetane composite resin. Each of those components may be blended into any one of the main agent and the curing agent in consideration of, for example, its reactivity with a component in each of the main agent and the curing agent, and the viscosities of the main agent and the curing agent. The blending of a component that reacts with a component in the main agent or the curing agent is avoided.

The reinforcing fibers to be used for the fiber-reinforced composite material of the present invention are selected from glass fibers, aramid fibers, carbon fibers, boron fibers, and the like. Of those, carbon fibers are preferably used for

obtaining a fiber-reinforced composite material excellent in strength.

The volume content of the reinforcing fibers in a fiber-reinforced composite material obtained from the resin composition for a fiber-reinforced composite material of the present invention and the reinforcing fibers falls within the range of preferably from 45% to 70%, more preferably from 48% to 62%. When the volume content is set within the range, a molded body having a small number of voids and a high volume content of the reinforcing fibers is obtained, and hence a molded material having an excellent strength is obtained.

The curing of the resin composition for a fiber-reinforced composite material may be preferably performed by: injecting the main agent at a temperature in the range of from 50°C to 90°C and the curing agent at a temperature in the range of from 20°C to 60°C into, for example, a mold having arranged therein the fibers in advance; and heating and curing the mixture at a temperature of from 90°C to 160°C, preferably from 100°C to 140°C for a time period of from 15 sec to 360 sec, preferably from 25 sec to 150 sec. Although the main agent and the curing agent may be simultaneously injected into the mold, to improve their uniformity, the agents are desirably injected after having been mixed immediately before the injection. However, the agents may be injected into the mold without being mixed, and then mixed in the presence of the fibers. A system for the mixing is not particularly limited, and a collision mixing system, a static mixer system, or the like is available; the collision mixing system is preferred because uniform mixing of the agents is completed in a short time period.

A case in which the injection temperature of the resin composition is low is not preferred because the fluidity of the resin composition reduces to cause defective filling into the molding mold and the fibers. In addition, a case in which the injection temperature is high is not preferredbecause of the following reasons : burrs occur; or the curing of the resin starts at the time of the injection, and hence the resin in the tank or in the molding mold cures to cause defective filling. In addition, a case in which the molding time is excessively short is not preferred because the resin composition is not sufficiently filled into the molding mold and the fibers, and a case in which the molding time is excessively long is not preferred because the resin in the mold cures to cause defective molding and to cause a reduction in productivity. The resin composition for a fiber-reinforced composite material of the present invention can be injected and impregnated at such relatively low injection temperature as described above into the molding mold, and can provide a cured product that can be released from the mold in a short curing time.

A cured product of the resin composition for a fiber-reinforced composite material of the present invention has a glass transition temperature (Tg) of preferably 100°C or more, more preferably 110°C or more. When the Tg is less than 100°C, the resultant fiber-reinforced composite material is liable to deform at the time of its release from a mold.

Although a method of producing a fiber-reinforced composite material from the resin composition of the present invention is not particularly limited, a resin transfer molding (RTM) method or a liquid compressionmolding (LCM) method is suitable. The RTM method is a method including: placing a fiber base material or preform formed of reinforcing fibers in a molding mold; injecting a resin composition for a fiber-reinforced composite material that is liquid into the molding mold to impregnate the reinforcing fibers with the resin composition, thereby providing a fiber-reinforced composite material; and then performing heating to cure the fiber-reinforced composite material, thereby providing a molded body. The conditions described for the curing of the resin composition for a fiber-reinforced composite material are suitable as conditions for the curing. The LCM method is a method including: placing a fiber base material or preform formed of reinforcing fibers blended with a resin in advance in a molding mold under a state in which a molding pressure is released; clamping the molding mold to simultaneously perform the impregnation of the reinforcing fibers with the resin and the molding of the fiber base material or the preform, thereby providing a fiber-reinforced composite material; and then heating the mold to cure the fiber-reinforced composite material, thereby providing a molded body. The conditions described for the curing of the resin composition for a fiber-reinforced composite material are also suitable as conditions for the curing in the LCM method.

## Examples

Next, the present invention is specifically described by way of Examples. However, the present invention is not limited to the following Examples without departing from the gist thereof. The term "part(s)" representing a blending amount means "part(s) by mass" unless otherwise stated.

Respective components used in Examples are abbreviated as described below. Viscosities are viscosities at 25°C unless otherwise stated, and are represented in the units of "mPa·s".

YD-128: bisphenol A-type epoxy resin (manufactured by Nippon Steel & Sumikin Chemical Co., Ltd., viscosity: 12,000)
YDF-170: bisphenol F-type epoxy resin (manufactured by Nippon Steel & Sumikin Chemical Co., Ltd., viscosity: 2,500)
YDPN-6300: phenol novolac-type epoxy resin (manufactured by Nippon Steel & Sumikin Chemical Co., Ltd.)
DTMPTTA: ditrimethylolpropane tetraacrylate (viscosity: 600)

PETTA: pentaerythritol tetraacrylate (viscosity: 130)
DPPA: dipentaerythritol pentaacrylate (viscosity: 6,750)
DPHA: dipentaerythritol hexaacrylate (viscosity: 5,500)
PEGDA: polyethyleneglycol diacrylate (viscosity: 13)
1,3-BAC: 1,3-bisaminomethylcyclohexane
NBDA: bis(aminomethyl)norbornane
IPDA: isophorone diamine
PACM: 4,4-methylenebis(cyclohexylamine)

Measurement or test methods for respective physical properties are as described below.

(Measurement of Viscosity of Main Agent, Viscosity of Curing Agent, and Viscosity Increase Ratio of Main Agent)

The viscosities of a main agent and a curing agent before their mixing were measured with a cone plate-type E-type viscometer (manufactured by Toki Sangyo Co., Ltd.: RE80H) at 25°C. A value after the lapse of 60 sec from the start of the measurement was adopted as the value of an initial viscosity.

In addition, the main agent was placed in a vacuum oven heated to 80°C, and was left at rest at a degree of vacuum of 1.0 kPa for 24 hr, followed by the performance of similar measurement of its viscosity with the E-type viscometer. A value after the lapse of 60 sec from the start of the measurement was adopted as the value of a viscosity after the lapse of 24 hr. Then, the viscosity increase ratio of the main agent was calculated by using the following equation.

$$\text{Viscosity increase ratio of main agent} = 100 \times (\text{viscosity after lapse of 24 hr}/\text{initial viscosity}) - 100$$

(Measurement of Gel Time)

A resin composition was added onto the plate of a gelation tester (manufactured by Nisshin Kagaku) that had been heated to 120°C, and was stirred with a fluorine resin rod at a speed of 2 revolutions per sec. A time required for the curing of the resin composition to proceed to lose its plasticity was adopted as a gel time.

(Measurement of Glass Transition Temperature)

A test piece for glass transition temperature measurement was subjected to measurement with a dynamic viscoelasticity tester under the conditions of a rate of temperature increase of 5°C/min, a bending mode, and a measurement frequency of 10 Hz, and the maximum value of its loss modulus (E") was defined as a glass transition temperature.

Example 1

95 Parts of YD-128 was used as the component (A), and 5 parts of PETTA was used as the component (B). The components were loaded into a 150-milliliter plastic container, and were mixed while being stirred with a vacuum mixer "AWATORI RENTARO" (manufacturedby Thinky Corporation) under room temperature for 5 min. Thus, a main agent was obtained. After the resultant main agent had been cooled to 10°C or less, 50 parts of the main agent and 11 parts of NBDA that was a curing agent were loaded into a 150-milliliterplastic container, and were stirred with the vacuum mixer under room temperature for 20 sec. Thus, a resin composition for a fiber-reinforced composite material was obtained.

(Mold Releasability Evaluation)

The resin composition for a fiber-reinforced composite material was cast into a mold measuring 60 mm long by 80 mm wide and heated to 120°C, the mold having arranged therein a 4-millimeter thick spacer hollowed out into a flat plate shape, and was cured for the gel time obtained in the gel time measurement, followed by its release from the mold. Mold releasability was evaluated on the basis of the difficulty with which the cured resin was released from the mold.

○····The releasability from the mold is satisfactory.
Δ····The release from the mold is somewhat difficult.
×····The release from the mold is difficult or the resin remains in the mold.

The resultant cured product was cut into a size measuring 50 mm by 10 mm with a table band saw, and was used in glass transition temperature measurement.

Examples 2 to 9 and Comparative Examples 1 to 8

Resin compositions for fiber-reinforced composite materials were each produced under the same mixing conditions as those of Example 1 except that respective raw materials were used as the components (A) to (C) according to the composition (parts) shown in each of Table 1 and Table 2. In addition, test pieces for glass transition temperature measurement were each produced by the same molding approach as that of Example 1.

The test results of Examples and Comparative Examples are shown in Table 1 and Table 2, respectively.

Table 1

| | Example 1 | Example 2 | Example 3 | Example 4 | Example 5 | Example 6 | Example 7 | Example 8 | Example 9 |
|---|---|---|---|---|---|---|---|---|---|
| YD-128 | 95 | 80 | 45 | 59 | 80 | 80 | 80 | 95 | 95 |
| YDF-170 | | | 35 | | | | | | |
| YDPN-6300 | | | | 21 | | | | | |
| PETTA | 5 | 20 | 20 | 20 | | | | 5 | 5 |
| DTMPTTA | | | | | 20 | | | | |
| DPPA | | | | | | 20 | | | |
| DPHA | | | | | | | 20 | | |
| NBDA | 21.8 | 25.2 | 26.1 | 25.6 | 23.1 | 23.9 | 24.5 | | 24.2 |
| 1,3-BAC | | | | | | | | 20.0 | |
| 4-tert-Butylphenol | | | | | | | | | 2.42 |
| Viscosity of main agent (mPa/s) | 9,980 | 5,063 | 2,850 | 18,900 | 4,010 | 8,920 | 9,100 | 9,980 | 9,980 |
| Viscosity of curing agent (mPa/s) | 20 | 20 | 20 | 20 | 20 | 20 | 20 | 10 | 20 |
| Viscosity increase ratio of main agent (%) | 0 | 0 | 14 | 8 | 0 | 0 | 0 | 0 | 0 |
| Gel time at 120°C (s) | 72 | 33 | 34 | 26 | 45 | 30 | 26 | 94 | 48 |
| Tg (°C) | 141 | 140 | 119 | 149 | 128 | 139 | 142 | 132 | 129 |
| Mold releasability | ○ | ○ | ○ | ○ | ○ | ○ | ○ | ○ | ○ |

Table 2

| | Comparative Example 1 | Comparative Example 2 | Comparative Example 3 | Comparative Example 4 | Comparative Example 5 | Comparative Example 6 | Comparative Example 7 | Comparative Example 8 |
|---|---|---|---|---|---|---|---|---|
| YD-128 | 100 | 80 | 95 | 95 | | | 98 | 70 |
| YDF-170 | | | | | 100 | 80 | | |
| PETTA | | | 5 | 5 | | 20 | 2 | 30 |
| PEGDA | | 20 | | | | | | |
| NBDA | 20.6 | 21.5 | | | 23.1 | 27.2 | 21.1 | 27.6 |
| IPDA | | | 24.0 | | | | | |
| PACM | | | | 29.6 | | | | |
| Viscosity of main agent (mPa/s) | 12,000 | 630 | 9,980 | 9,980 | 2,500 | 2,850 | 11,100 | 1,820 |
| Viscosity of curing agent (mPa/s) | 20 | 20 | 18 | 250 | 20 | 20 | 20 | 20 |
| Viscosity increase ratio of main agent (%) | 0 | 0 | 0 | 0 | 0 | 124 | 0 | 0 |
| Gel time at 120°C (s) | 96 | 136 | 149 | 125 | 101 | 37 | 88 | 22 |
| Tg (°C) | 149 | 98 | 138 | 146 | 138 | 125 | 146 | 136 |
| Mold releasability | ○ | Δ | ○ | ○ | ○ | ○ | ○ | × |

Industrial Applicability

The resin composition for a fiber-reinforced composite material of the present invention has a low viscosity, has satisfactory impregnability into reinforcing fibers, and shows short-time curability. Further, a molded product obtained by curing the resin composition is excellent in releasability from a mold and has a high glass transition temperature. The resin composition is particularly suitable as a resin composition for a fiber-reinforced composite material to be used for turning a fiber-reinforced composite material into a molded body by a resin transfer molding method or a liquid compression molding method.

## Claims

**1.** A resin composition for a fiber-reinforced composite material, comprising:

a main agent containing an epoxy resin (A) and an acrylate compound (B) having 4 or more acryloyl groups in a molecule thereof; and
a curing agent containing an amine compound (C) represented by the following general formula (1),
the resin composition being a two-component curable resin composition including the main agent and the curing agent at a mass ratio in a range of from 90:10 to 65:35,
wherein the epoxy resin (A) contains 50 mass% to 100 mass% of a bisphenol A-type epoxy resin,
wherein amass ratio between the epoxy resin (A) and the acrylate compound (B) in the main agent falls within a range of from 96:4 to 80:20,
wherein the main agent has a viscosity at 25°C measured with an E-type viscometer of 20,000 mPa·s or less, and wherein the curing agent has a viscosity at 25°C measured with the E-type viscometer of 800 mPa·s or less:

$$X\text{-}(CH_2NH_2)_n \qquad (1)$$

where X represents an n-valent organic group having 1 to 16 carbon atoms, and "n" represents 2 or 3.

**2.** The resin composition for a fiber-reinforced composite material according to claim 1, wherein X in the general formula (1) represents an n-valent hydrocarbon group having an alicyclic structure having 6 or more carbon atoms, and the alicyclic structure may have a secondary amine structure therein.

**3.** The resin composition for a fiber-reinforced composite material according to claim 1 or 2, wherein the amine compound (C) is represented by the following formula (2) or (3).

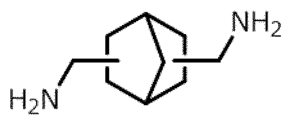
(2)

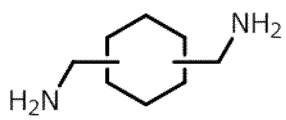
(3)

**4.** The resin composition for a fiber-reinforced composite material according to any one of claims 1 to 3, wherein the acrylate compound (B) is at least one kind selected from ditrimethylolpropane tetraacrylate, pentaerythritol tetraacrylate, dipentaerythritol pentaacrylate, and dipentaerythritol hexaacrylate.

**5.** The resin composition for a fiber-reinforced composite material according to any one of claims 1 to 4, wherein the main agent shows a viscosity increase ratio of 16% or less after a lapse of 24 hr at a degree of vacuum of 1.0 kPa and 80°C.

**6.** The resin composition for a fiber-reinforced composite material according to any one of claims 1 to 5, wherein a cured product obtained by thermally treating the resin composition for a fiber-reinforced composite material at 130°C for 5 min to cure the resin composition shows a glass transition temperature of 110°C or more.

7. A fiber-reinforced composite material, which is obtained by blending the resin composition for a fiber-reinforced composite material of any one of claims 1 to 6 with reinforcing fibers.

8. The fiber-reinforced composite material according to claim 7, wherein a volume content of the reinforcing fibers is from 45% to 70%.

9. A cured product, which is obtained by curing the fiber-reinforced composite material of claim 7 or 8.

10. A method of producing a molded body, comprising molding the fiber-reinforced composite material of claim 7 or 8 by a resin transfer molding method or a liquid compression molding method.

11. A method of producing a molded body, comprising the steps of:

preparing a main agent that contains an epoxy resin (A) containing 50 mass% to 100 mass% of a bisphenol A-type epoxy resin and an acrylate compound (B) having 4 or more acryloyl groups in a molecule thereof, that contains the epoxy resin (A) and the acrylate compound (B) at a mass ratio in a range of from 96:4 to 80:20, and that has a viscosity at 25°C measured with an E-type viscometer of 20,000 mPa·s or less, and a curing agent containing an amine compound (C) represented by the following general formula (1):

$$X\text{-}(CH_2NH_2)_n \qquad (1)$$

where X represents an n-valent organic group having 1 to 16 carbon atoms, and "n" represents 2 or 3;
warming the main agent to from 50°C to 90°C, and warming the curing agent to from 20°C to 60°C to provide a two-component curable resin composition for a fiber-reinforced composite material so that a mass ratio between the main agent and the curing agent falls within a range of from 90:10 to 65:35;
mixing two components of the two-component curable resin composition for a fiber-reinforced composite material and reinforcing fibers to provide a fiber-reinforced composite material; and
then curing and molding the fiber-reinforced composite material in a mold under heat.

**INTERNATIONAL SEARCH REPORT**

International application No. PCT/JP2018/033838

A. CLASSIFICATION OF SUBJECT MATTER
Int.Cl. C08G59/50(2006.01)i, C08F20/20(2006.01)i, C08J5/04(2006.01)i

According to International Patent Classification (IPC) or to both national classification and IPC

B. FIELDS SEARCHED

Minimum documentation searched (classification system followed by classification symbols)
Int.Cl. C08G59/50, C08F20/20, C08J5/04

Documentation searched other than minimum documentation to the extent that such documents are included in the fields searched

| | |
|---|---|
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)
CAplus/REGISTRY (STN)

C. DOCUMENTS CONSIDERED TO BE RELEVANT

| Category* | Citation of document, with indication, where appropriate, of the relevant passages | Relevant to claim No. |
|---|---|---|
| A | JP 8-325358 A (TOYO INK MANUFACTURING CO., LTD.) 10 December 1996, entire text (Family: none) | 1-11 |
| A | JP 9-77849 A (TOYO INK MANUFACTURING CO., LTD.) 25 March 1997, entire text (Family: none) | 1-11 |
| A | JP 9-296027 A (TOYO INK MANUFACTURING CO., LTD.) 18 November 1997, entire text (Family: none) | 1-11 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

Date of the actual completion of the international search
02 November 2018 (02.11.2018)

Date of mailing of the international search report
13 November 2018 (13.11.2018)

Name and mailing address of the ISA/
Japan Patent Office
3-4-3, Kasumigaseki, Chiyoda-ku,
Tokyo 100-8915, Japan

Authorized officer

Telephone No.

Form PCT/ISA/210 (second sheet) (January 2015)

**INTERNATIONAL SEARCH REPORT**

International application No.
PCT/JP2018/033838

C (Continuation). DOCUMENTS CONSIDERED TO BE RELEVANT

| Category* | Citation of document, with indication, where appropriate, of the relevant passages | Relevant to claim No. |
|---|---|---|
| A | JP 2001-11162 A (TOAGOSEI CO., LTD.) 16 January 2001, entire text (Family: none) | 1-11 |
| A | JP 2001-163955 A (MITSUBISHI GAS CHEMICAL CO., INC.) 19 June 2001, entire text (Family: none) | 1-11 |
| A | JP 2002-12651 A (TOAGOSEI CO., LTD.) 15 January 2002, entire text (Family: none) | 1-11 |
| A | JP 2002-256139 A (TORAY INDUSTRIES, INC.) 11 September 2002, entire text (Family: none) | 1-11 |
| A | JP 2006-152279 A (SANYO CHEMICAL INDUSTRIES, LTD.) 15 June 2006, entire text (Family: none) | 1-11 |
| A | JP 2012-211244 A (AICA KOGYO CO., LTD.) 01 November 2012, entire text (Family: none) | 1-11 |
| A | JP 2012-246463 A (NOF CORPORATION) 13 December 2012, entire text & CN 10295897 4 A & TW 201247768 A & KR 10-2014-0021678 A | 1-11 |
| A | JP 2015-535022 A (DOW GLOBAL TECHNOLOGIES LLC) 07 December 2015, entire text & US 2015/0240025 A1, entire text & EP 2920227 A1 & CN 104781303 A & KR 10-2015-0084844 A | 1-11 |
| A | WO 2016/158871 A1 (MITSUBISHI GAS CHEMICAL CO., INC.) 06 October 2016, entire text & CN 107406579 A & TW 201638138 A | 1-11 |
| P, X | WO 2018/070470 A1 (NIPPON STEEL & SUMIKIN CHEMICAL CO., LTD.) 19 April 2018, entire text (Family: none) | 1-11 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2006265434 A
- JP 2002256139 A
- JP 2002275242 A
- JP 2012211244 A
- JP 2016098322 A
- JP 2015535022 A
- JP 2015536373 A
- JP 2013216871 A
- WO 2011052161 A1